# FASCICULE DE BREVET EUROPEEN

(11) **EP 2 419 389 B1**
(45) Date de publication et mention de la délivrance du brevet: **13.01.2016**
(21) Numéro de dépôt: 10717794.1
(22) Date de dépôt: 15.04.2010
(51) Int. Cl.: C03B 5/43, C04B 35/12, C04B 35/01

(54) **PRODUIT FRITTE A BASE D'OXYDE DE CHROME**
GESINTERTES PRODUKT AUF DER BASIS VON CHROMOXID
SINTERED PRODUCT ON THE BASIS OF CHROMIUM OXIDE

(30) Priorité: 15.04.2009 FR 0952469
(43) Date de publication de la demande: 22.02.2012
(73) Titulaire: Saint-Gobain Centre De Recherches Et D'etudes Europeen, 92400 Courbevoie (FR)
(72) Inventeur: CITTI, Olivier, Wellesley Massachusetts 02482 (US); FOURCADE, Julien, Shrewsbury Massachusetts 01545 (US)
(74) Mandataire: Sartorius, Jérome
(86) Numéro de dépôt international: PCT/IB2010/051646
(87) Numéro de publication internationale: WO 2010/119422

(56) Documents cités:
- WO-A-88/00931
- WO-A2-2010/011516
- US-A- 4 724 224
- US-B1- 6 815 386
- E.V. DEGTYAREVA ET AL: "New Refractories for the glass furnace of the glass-fiber sector" UKRAINIAN SCIENTIFIC-RESEARCH INSTITUTE OF REFRACTORIES, 1 octobre 1977 (1977-10-01), pages 610-616, XP002593477
- JAMES BENNET ET AL: "An analysis of the causes of failure in high chrome oxide refractory materials from slagging gasifiers" REPORT DOE/NETL-IR-2006-183, 1 janvier 2006 (2006-01-01), pages 1-6, XP002593478 Albany, USA
- ZONG-QI ET AL: "The Optimisation of the Microstructure and Phase Assemblage of High Chromia Refractories" JOURNAL OF THE EUROP.CER.SOCIETY 19 (1999), vol. 19, 1 janvier 1999 (1999-01-01), pages 113-117, XP002593479 Great Britain

## Description

### Domaine technique

L'invention concerne notamment un nouveau produit fritté élaboré à partir d'oxyde de chrome une installation et une cuve comportant ledit produit.

### Etat de la technique

WO2010/011516 A2, US 4 724 224 A, WO88/00931 A et l'article de E.V. DEGTYAREVA et al., intitulé "New Refractories for the glass furnace of the glass-fiber sector", Ukrainian Scientific Research Institute of Refractories, 1er octobre 1977, pages 610-616, divulguent des produits à base d'oxyde de chrome.

Parmi les produits réfractaires, on distingue les produits fondus et coulés et les produits frittés.

A la différence des produits frittés, les produits fondus et coulés comportent le plus souvent une phase vitreuse intergranulaire très abondante qui vient remplir un réseau de grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas a *priori* utilisable telle quelle pour fabriquer un produit fritté, et réciproquement.

Les produits frittés sont obtenus par mélange de matières premières appropriées puis mise en forme à cru de ce mélange et cuisson de la pièce crue résultante à une température et pendant un temps suffisants pour obtenir le frittage de cette pièce crue.

Les produits frittés, selon leur composition chimique, sont destinés à des industries très variées.

FR 2 647 435 propose des produits frittés à base d'oxyde de chrome comportant de l'oxyde de titane et de la zircone monoclinique et présentant une bonne résistance aux chocs thermiques et à la corrosion par le verre fondu.

EP 546 432 propose des produits frittés à base d'oxyde de chrome comportant de l'oxyde de titane.

Les produits frittés élaborés à partir d'oxyde de chrome sont aujourd'hui largement utilisés dans les fours de verrerie, en particulier pour les fours de fusion des verres destinés à la fabrication de fibres de verre. En effet, les produits d'oxyde chrome denses présentent une excellente résistance à la corrosion. Ainsi, US 4,724,224 décrit un bloc fritté à base d'oxyde de chrome présentant une bonne résistance à la corrosion par le verre en fusion. Ce produit comporte au moins environ 1 % de silice.

Néanmoins, l'oxyde de chrome est particulièrement sensible à la sublimation lorsqu'il est soumis à des températures supérieures à 1000°C dans une atmosphère oxydante, en particulier en présence d'humidité.

Enfin, si le verre contient des espèces volatiles telles que des borates alcalins ou de la soude (NaOH), ces éléments réagissent avec l'oxyde de chrome pour former des chromates alcalins tels que Na₂CrO₄. Ces réactions favorisent la sublimation de l'oxyde de chrome, augmentent la corrosion, et peuvent entraîner la recondensation d'oxydes de chrome et de chromates dans des zones plus froides du four, comme dans le circuit de mise à l'atmosphère des fumées (sous forme de poussières) ou encore sur les faces des blocs moins exposées à la chaleur, par exemple à l'arrière des blocs. Quand cette recondensation se produit à l'arrière des blocs de feeders ou des blocs de cuve, il y a également un risque accru de lâcher d'inclusions riches en chrome dans le verre.

L'actuel développement des verres de très haute qualité augmente les exigences pour les produits réfractaires des fours de verrerie, notamment pour les produits utilisés en cuve. Il existe donc un besoin pour un nouveau produit réfractaire présentant une bonne résistance à la sublimation.

La présente invention vise à satisfaire ce besoin.

### Résumé de l'Invention

A cet effet, l'invention propose un produit fritté selon la revendication 1.

De manière inattendue, les inventeurs ont découvert que la composition de ce produit permet d'atteindre des performances remarquables, et en particulier une très bonne résistance à la sublimation.

Un produit selon l'invention est donc bien adapté à une application comme bloc de cuve, en particulier lorsqu'il est destiné à entrer en contact avec des verres en fusion tels que les verres de renforcement (verres E).

De préférence, un produit selon l'invention peut encore présenter une ou plusieurs des caractéristiques optionnelles suivantes :
- La teneur en alumine Al₂O₃ est supérieure à 2%, de préférence supérieure à 4% et/ou inférieure à 18%, de préférence inférieure à 15%, de préférence inférieure à 12%, de préférence inférieure à 9%.
- La teneur en oxyde de titane TiO₂ est de préférence supérieure à 1%, de préférence encore supérieure à 1,5%, voire supérieure à 2% et/ou inférieure à 5%, de préférence inférieure à 4,5%.
- Dans un mode de réalisation, le produit ne comporte pas de zircone. Dans un autre mode de réalisation la teneur en zircone (ZrO₂) est supérieure à 0,2%, supérieure à 1,0%, supérieure à 1,5%, supérieure à 2,0%, voire inférieure à 4,0%, ou inférieure à 3,9%, ou inférieure à 3,6%, ou inférieure à 3,5%.
- Moins de 20%, voire moins de 18%, voire moins de 15%, voire moins de 10% en masse de la zircone est stabilisée sous forme cubique et/ou quadratique (ou tétragonale).
- La teneur totale des espèces oxydes autres que Cr₂O₃, Al₂O₃, ZrO₂ et TiO₂ dans le produit fritté est inférieure à 2,0%, de préférence inférieure à 1,0%, de préférence inférieure à 0,7%, de préférence encore inférieure à 0,5%, et, de préférence toujours, inférieure à 0,2%, en pourcentages en masse sur la base des oxydes. En particulier, de préférence, la teneur en silice SiO₂ est inférieure à 0,8%, inférieure à 0,7%, inférieure à 0,6%, inférieure à 0,5%, de préférence inférieure à 0,3%, de préférence encore inférieure à 0,1%, voire sensiblement nulle et/ou la teneur en oxyde(s) de phosphore est inférieure à 1,0%, de préférence inférieure à 0,5%, voire sensiblement nulle.
- La porosité apparente est inférieure à 15%, de préférence inférieure à 10%, de préférence inférieure à 5%, de préférence inférieure à 2%, de préférence inférieure à 1 %.
- Le produit présente une densité apparente supérieure à 4,0 g/cm³, de préférence supérieure à 4,4 g/cm³, de préférence supérieure à 4,5 g/cm³, voire supérieure à 4,6 g/cm³.
- Le produit se présente sous la forme d'un bloc, présentant de préférence une masse supérieure à 5 kg, de préférence supérieure à 10 kg.

Le procédé de fabrication du produit fritté comprend les étapes suivantes :
a) mélange de matières premières pour former une charge de départ,
b) mise en forme d'une pièce crue à partir de ladite charge de départ,
c) frittage de ladite pièce crue de manière à obtenir ledit produit fritté,
ce procédé étant remarquable en ce que la charge de départ est déterminée de manière que ledit produit fritté soit conforme à l'invention.

De préférence, un procédé peut encore présenter une ou plusieurs des caractéristiques optionnelles suivantes :
- Les matières premières particulaires apportant les oxydes (poudres d'oxydes et éventuellement poudre(s) de chamotte), présentent chacune une taille médiane inférieure à 150 µm, de préférence inférieure à 100 µm, de préférence inférieure à 50 µm.
- Le produit est fabriqué à partir d'une charge de départ dans laquelle les oxydes Cr₂O₃, Al₂O₃, TiO₂, et éventuellement ZrO₂, sont présents sous la forme de particules desdits oxydes et éventuellement de particules de chamotte desdits oxydes, l'ensemble desdites particules formant un mélange de poudres présentant une taille médiane inférieure à 50 µm, de préférence inférieure à 40 µm, de préférence inférieure à 20 µm, de préférence inférieure à 10 µm, voire inférieure à 5 µm.
- La charge de départ comporte au moins 10% et/ou moins de 50% de chamotte, en pourcentages en masse sur la base des oxydes de la charge de départ.
- La chamotte présente une taille médiane inférieure à 50 µm, de préférence inférieure à 40 µm, de préférence inférieure à 20 µm.
- La mise en forme est réalisée par pressage isostatique.

Enfin le produit fritté selon l'invention est utilisé dans un four de verrerie, en particulier dans une zone du four susceptible d'entrer en contact avec du verre en fusion ou avec des fumées émises par du verre en fusion, par exemple dans un circuit de mise à l'atmosphère des fumées.

L'invention concerne ainsi également une installation comportant un produit selon l'invention, ledit produit étant disposé dans une région de ladite installation où il est susceptible d'entrer en contact avec un environnement oxydant à plus de 1000°C ou avec des fumées émises par du verre en fusion. Le produit peut en particulier être disposé dans une région de ladite cuve où il est susceptible d'entrer en contact avec un verre en fusion, en particulier avec un verre de renforcement, par exemple de type verre E, verre R ou verre S, un verre AR (Alcali Resistant) ou encore un verre pour fibres d'isolation.

D'autres caractéristiques et avantages de l'invention apparaîtront encore à la lecture de la description détaillée qui va suivre.

### Définitions

Par « impuretés », on entend les constituants inévitables, introduits nécessairement avec les matières premières ou résultant de réactions avec ces constituants. Les impuretés ne sont pas des constituants nécessaires, mais seulement tolérés.

On appelle « taille » d'une particule, la moyenne de sa plus grande dimension dM et de sa plus petite dimension dm : (dM+dm)/2.

Classiquement, la « taille maximale » d'une particule correspond à la maille de tamis standard minimale à travers laquelle ladite particule peut passer.

Classiquement, on appelle « taille médiane » d'un mélange de particules, la taille divisant les particules de ce mélange en première et deuxième populations égales en nombre, ces première et deuxième populations ne comportant que des particules présentant une taille supérieure, ou inférieure respectivement, à la taille médiane.

Un verre E présente une analyse chimique suivante, selon la norme ASTM D 578 - 05, « *Standard Spécification for Glass Fiber Strands* », (en pourcentages massiques) :
- B₂O₃ : 0 - 10%
- CaO: 16 - 25%
- Al₂O₃: 12 - 16%
- SiO₂ : 52 - 62%
- MgO : 0 - 5%
- Oxydes alcalins : 0 - 2%
- TiO₂ : 0 - 1,5%
- Fe₂O₃ : 0,05 - 0,8%
- Fluor : 0 - 1%

Sauf mention contraire, tous les pourcentages sont des pourcentages massiques sur la base des oxydes lorsqu'il est fait référence au produit fritté ou à la charge de départ.

### Description détaillée

Un produit selon l'invention peut être fabriqué suivant les étapes a) à c) décrites ci-dessus.

Ces étapes sont conventionnelles, mais, à l'étape a), la charge de départ est déterminée, de manière bien connue de l'homme du métier, de façon que le produit fritté obtenu à l'issue de l'étape c) présente des teneurs en Cr₂O₃, Al₂O₃, et TiO₂ qui appartiennent aux plages de l'invention décrites précédemment, en particulier aux plages préférées. ,

Une teneur minimale de 0,5% de TiO₂ est considérée comme nécessaire pour obtenir un effet technique utile. La teneur en TiO₂ doit être limitée pour éviter de diminuer la résistance à la corrosion.

Dans un mode de réalisation, on n'ajoute pas de zircone dans la charge de départ. Dans un autre mode de réalisation cependant, la charge de départ est déterminée de manière que le produit fritté comprenne de 0,2% à < 5 % de ZrO₂. Sa résistance aux chocs thermiques en est avantageusement améliorée.

La charge de départ est de préférence également déterminée de manière que la teneur totale des espèces oxydes autres que Cr₂O₃, Al₂O₃, ZrO₂ et TiO₂ dans le produit fritté, ci-après les « autres espèces oxydes », soit inférieure à 2,0%, de préférence soit inférieure à 1,0%, de préférence soit inférieure à 0,7%, de préférence encore inférieure à 0,5%, et, de préférence toujours, inférieure à 0,2%, en pourcentages en masse sur la base des oxydes.

Par définition, les autres espèces oxydes constituent le complément à 100% des oxydes Cr₂O₃, Al₂O₃, ZrO₂ et TiO₂. La limitation de la teneur totale de ces autres espèces oxydes permet donc avantageusement d'augmenter la teneur des oxydes Cr₂O₃, Al₂O₃, ZrO₂ et TiO₂, et en particulier la teneur en oxyde de chrome. Elle permet également de limiter la teneur d'espèces nuisibles, comme la silice, dont la présence tend à réduire la résistance à la corrosion.

De préférence, les autres espèces oxydes sont constituées par les impuretés, c'est-à-dire qu'aucune autre espèce que Cr₂O₃, Al₂O₃, ZrO₂ et TiO₂ n'est introduite dans la charge de départ dans le but de modifier la composition du produit fritté. A des teneurs inférieures à 2,0% dans le produit fritté, en pourcentage en masse sur la base des oxydes, on considère que l'effet des impuretés ne modifie pas substantiellement le résultat obtenu. De préférence, la teneur totale en impuretés dans le produit fritté est inférieure à 0,7%, de préférence encore à 0,5%, en pourcentages en masse sur la base des oxydes.

De préférence, la teneur de chacune des impuretés dans le produit fritté est inférieure à 0,5%, inférieure à 0,3%, voire inférieure à 0,1% ou inférieure à 0,05%.

Les impuretés comprennent en particulier Fe₂O₃, P₂O₅, SiO₂, MgO, CaO, les oxydes alcalins comme Na₂O.

De préférence, la charge de départ est déterminée de manière que, dans le produit fritté, en pourcentages en masse sur la base des oxydes :
- Fe₂O₃ < 0,2%, de préférence Fe₂O₃ < 0,1%, de préférence encore Fe₂O₃ < 0,08% ; et/ou
- P₂O₅ < 1 %, de préférence P₂O₅ < 0,5% ; et/ou
- SiO₂ < 0,6%, de préférence SiO₂ < 0,3%, de préférence SiO₂ < 0,1%.

La charge de départ est également déterminée pour que les oxydes représentent de préférence plus de 99,9% de la masse du produit fritté, de préférence environ 100% de la masse du produit fritté.

De préférence, les poudres d'oxydes Cr₂O₃, Al₂O₃, ZrO₂ et TiO₂ présentent chacune une taille médiane inférieure à 150 µm, de préférence inférieure à 100 µm, de préférence inférieure à 50 µm. De préférence encore, le mélange de ces poudres présente une taille médiane inférieure à 50 µm, de préférence inférieure à 40 µm, de préférence inférieure à 20 µm, de préférence inférieure à 10 µm, voire inférieure à 5 µm. La densification de la pièce lors de l'étape de frittage en est avantageusement améliorée.

Il est également préférable que la charge de départ comporte plus de 10% de chamotte. La structure des particules de chamotte améliore avantageusement le compactage lors de la formation de la pièce crue.

La chamotte peut être obtenue par frittage de poudres de Cr₂O₃ et/ou de Al₂O₃ et/ou de TiO₂ et/ou de ZrO₂, puis broyage. La chamotte peut en particulier provenir d'un recyclage d'un produit selon l'invention.

La taille maximale des particules de chamotte est de préférence inférieure à 150 µm, de préférence inférieure à 100 µm. De préférence, la poudre de chamotte présente une taille médiane inférieure à 50 µm, de préférence inférieure à 20 µm.

La teneur en chamotte est de préférence inférieure à 50%, voire inférieure à 30%.

Outres les matières premières dosées pour que le produit fritté ait la composition chimique pondérale moyenne désirée, la charge de départ peut encore classiquement comporter des liants habituels, par exemple un liant organique et/ou des défloculants.

A l'étape b), le mélange préparé à l'étape a) peut être versé dans un moule, puis mis en forme, de manière à former une pièce crue.

De préférence, le moule est conformé de manière que le produit fritté obtenu se présente sous la forme d'un bloc présentant une masse supérieure à 5 kg, de préférence à 10 kg. De tels blocs sont bien adaptés aux applications visées.

La mise en forme peut par exemple résulter d'un pressage isostatique, d'un coulage en barbotine, d'un pressage uniaxial, du coulage d'un gel, d'un vibro-coulage ou d'une combinaison de ces techniques.

De préférence, elle résulte d'un pressage isostatique à des pressions supérieures à 100 MPa. Cette technique permet en effet un frittage plus réactif et l'obtention de produits frittés plus denses. La porosité apparente des produits frittés peut ainsi être inférieure à 15%, de préférence inférieure à 10%, de préférence inférieure à 5%, de préférence inférieure à 2%, de préférence inférieure à 1%. Leur densité apparente peut être supérieure à 4 g/cm³.

A l'étape c), la pièce crue est frittée.

Le frittage est de préférence effectué à une température comprise entre 1400 et 1700°C, sous atmosphère réductrice ou oxydante, de préférence sous atmosphère réductrice et de préférence à pression atmosphérique.

A l'issue du frittage, on obtient un produit fritté selon l'invention.

Avantageusement, un produit fritté fabriqué suivant le procédé ci-dessus présente un indice de résistance à la sublimation Is, suivant le test défini ci-dessous, supérieur à 150, de préférence supérieur à 175, de préférence encore supérieur 200.

D'excellentes performances sont notamment obtenues lorsque le produit est élaboré à partir d'une charge de départ contenant entre 2 et 12% d'Al₂O₃ et 3 à 5% de TiO₂, en pourcentage en masse sur la base de la masse sèche des oxydes de la charge de départ.

Les exemples non limitatifs suivants sont donnés dans le but d'illustrer l'invention.

Dans ces exemples, les matières premières employées suivantes ont été choisies, les pourcentages donnés étant des pourcentages massiques sur la base des oxydes :
- poudre d'oxyde de chrome contenant environ 99,5% de Cr₂O₃ et dont la taille médiane est de 2,8 µm ;
- poudre d'alumine dont la taille médiane est de 3 µm environ ;
- poudre d'oxyde de titane contenant environ 95% de TiO₂ et dont la taille médiane est de 2,3 µm.

Des blocs réfractaires frittés ont été fabriqués selon les étapes a) à c) décrites précédemment.

A l'étape b), le mélange a été mis en forme par pressage isostatique afin de former des pièces crues de dimensions 100 mm x 100 mm et d'environ 150 mm de hauteur.

A l'étape c), les pièces crues ont alors été frittées sous atmosphère réductrice, à pression atmosphérique et à une température de frittage de 1550°C.

Pour mesurer la résistance à la corrosion et la résistance à la sublimation, des échantillons sous la forme de barreaux cylindriques de produit de 20 mm de diamètre et de 100 mm de hauteur ont été prélevés et soumis à un test consistant à faire tourner les échantillons immergés dans un bain de verre E pour fibres de renforcement en fusion, porté à 1550°C. La vitesse de rotation autour de l'axe du porte-échantillon était de 6 tours par minute. Une telle vitesse permet de renouveler très fréquemment l'interface de corrosion et rend donc l'essai beaucoup plus sollicitant. Le test a duré 180 heures. A la fin de cette période, pour chaque échantillon, la partie immergée et la partie émergée ont été séparées. On a évalué, pour chaque partie, le volume restant de l'échantillon puis, par différence, le volume perdu pendant le test. On calcule ensuite le pourcentage de volume perdu en faisant le rapport du volume perdu au volume initial. Le pourcentage de volume perdu d'un échantillon du produit de référence (exemple 1) est choisi comme base de comparaison.

Le rapport du pourcentage de volume immergé perdu par corrosion de l'échantillon du produit de référence au pourcentage de volume immergé perdu par corrosion de tout échantillon, multiplié par 100, donne une évaluation de la résistance à la corrosion par le verre de l'échantillon testé par rapport à celle du produit de référence. « Ic » désigne l'indice de corrosion, ainsi défini, dans le tableau 1 suivant ainsi que dans les revendications.

Ainsi, les indices de corrosion supérieurs à 100 correspondant à une moindre perte par corrosion que celle du produit de référence. Les produits en question présentent donc une meilleure résistance à la corrosion par le verre fondu que le produit de référence. Les indices de corrosion inférieurs à 100 correspondant à une perte par corrosion plus importante que celle du produit de référence. Les produits en question présentent donc une résistance à la corrosion par le verre fondu plus faible que le produit de référence.

Le rapport du pourcentage de volume émergé perdu par sublimation de l'échantillon du produit de référence au pourcentage de volume émergé perdu par sublimation de tout échantillon, multiplié par 100, donne une évaluation de la résistance à la sublimation de l'échantillon testé par rapport à celle du produit de référence. « Is » désigne l'indice de sublimation, ainsi défini, dans le tableau 1 suivant ainsi que dans les revendications.

Ainsi, les indices de sublimation supérieurs à 100 correspondent à une moindre perte par sublimation que celle du produit de référence. Les produits en question présentent donc une meilleure résistance à la sublimation que le produit de référence. Les indices de sublimation inférieurs à 100 représentent une perte par sublimation plus importante que celle du produit de référence. Les produits en question présentent donc une résistance à la sublimation plus faible que le produit de référence. On considère ici que la résistance à la sublimation est particulièrement satisfaisante lorsque l'indice de sublimation Is est supérieur ou égal à 120 (sur la base de l'exemple 1).

L'exemple 1, produit de référence, est le produit C1215 commercialisé par Saint-Gobain SEFPRO. Ce produit est aujourd'hui utilisé pour les cuves des fours de fusion du verre.

Le tableau 1 résume les résultats obtenus.

L'analyse chimique moyenne des différents produits testés est fournie en pourcentages massiques sur la base des oxydes. Le complément à 100% correspond à des impuretés.

**Tableau 1**

| | Composition massique | | | | | | |
|---|---|---|---|---|---|---|---|
| n° | % Cr₂O₃ | % Al₂O₃ | % TiO₂ | % ZrO₂ | Densité (g/cm³) | Ic | Is |
| 1** | 94,2 | | 3,8 | | 4,33 | 100 | 100 |
| 2 | 93,5 | 2,5 | 4,0 | | 4,78 | 118 | 130 |
| 3 | 91,0 | 5,0 | 4,0 | | 4,72 | 115 | 239 |
| 4 | 86,0 | 10,0 | 4,0 | | 4,58 | 106 | 288 |
| 5 | 76,0 | 20,0 | 4,0 | | 4,59 | 100 | ND |
| 6 | 88,5 | 5,0 | 3,0 | 3,5 | 4,81 | 100 | 110 |

| | | | | | | | |
|---|---|---|---|---|---|---|---|
| (**) : exemple hors invention | | | | | | | |

Le tableau 1 montre que les produits selon l'invention testés présentent une résistance à la sublimation considérablement améliorée.

Leur résistance à la corrosion reste acceptable. Elle peut même être significativement supérieure à celle du produit de l'exemple 1.

Bien entendu, la présente invention n'est pas limitée aux modes de réalisation décrits et représentés fournis à titre d'exemples illustratifs et non limitatifs.

## Revendications

1. Produit réfractaire fritté présentant une composition chimique moyenne telle que, en pourcentages massiques sur la base des oxydes :
Cr₂O₃ : au moins 72,0%
2% < Al₂O₃ ≤ 20%
0,5% < TiO₂ ≤ 6,0%
ZrO₂ < 4,0%
SiO₂ ≤ 0,9%.

2. Produit selon la revendication précédente, fabriqué à partir d'une charge de départ dans laquelle les oxydes Cr₂O₃, Al₂O₃, TiO₂, et éventuellement ZrO₂, sont présents sous la forme de particules desdits oxydes et éventuellement de particules de chamotte desdits oxydes, l'ensemble desdites particules formant un mélange de poudres présentant une taille médiane inférieure à 50 µm.

3. Produit selon la revendication précédente, fabriqué à partir d'une charge de départ dans laquelle les oxydes Cr₂O₃, Al₂O₃, TiO₂, et éventuellement ZrO₂, sont présents sous la forme de particules desdits oxydes et éventuellement de particules de chamotte desdits oxydes, l'ensemble desdites particules formant un mélange de poudres présentant une taille médiane inférieure à 10 µm.

4. Produit selon l'une quelconque des revendications précédentes, fabriqué à partir d'une charge de départ dans laquelle les matières premières particulaires apportant les oxydes présentent chacune une taille médiane inférieure à 150 µm.

5. Produit selon l'une quelconque des revendications précédentes, fabriqué à partir d'une charge de départ comportant au moins 10% de chamotte, en pourcentage massique sur la base des oxydes.

6. Produit selon l'une quelconque des revendications précédentes, fabriqué à partir d'une charge de départ dans laquelle les poudres d'oxydes et éventuellement de chamotte présentent chacune une taille médiane inférieure à 150 µm.

7. Produit selon l'une quelconque des revendications précédentes, comportant une teneur en zircone ZrO₂ supérieure à 0,2%.

8. Produit selon la revendication précédente, comportant une teneur en zircone ZrO₂ supérieure à 2,0%.

9. Produit selon l'une quelconque des revendications précédentes, dans lequel la teneur en alumine Al₂O₃ est inférieure à 18%.

10. Produit fritté selon la revendication précédente, dans lequel la teneur en alumine Al₂O₃ est supérieure à 4% et inférieure à 9%.

11. Produit selon l'une quelconque des revendications précédentes, dans lequel la teneur en oxyde de titane TiO₂ est inférieure à 5%.

12. Produit selon l'une quelconque des revendications précédentes, dans lequel la teneur en oxyde de titane TiO₂ est supérieure à 1,5% et inférieure à 4,5%.

13. Produit selon l'une quelconque des revendications précédentes, dans lequel Fe₂O₃ < 0,2% et/ou P₂O₅ < 1% et/ou SiO₂ < 0,5%.

14. Produit selon l'une quelconque des revendications précédentes, sous la forme d'un bloc présentant une masse supérieure à 5 kg.

15. Installation comportant un produit selon l'une quelconque des revendications précédentes, ledit produit étant disposé dans une région de ladite installation où il est susceptible d'entrer en contact avec un environnement oxydant à plus de 1000°C ou avec des fumées émises par du verre en fusion.

16. Cuve comportant un produit selon l'une quelconque des revendications 1 à 14, ledit produit étant disposé dans une région de ladite cuve où il est susceptible d'entrer en contact avec un verre en fusion.

17. Cuve selon la revendication précédente, dans lequel ledit verre en fusion est un verre de renforcement de type verre E, verre R ou verre S, un verre AR ou un verre pour fibres d'isolation.

## Patentansprüche

1. Gesintertes Feuerfestprodukt, welches eine mittlere chemische Zusammensetzung in Massenprozent auf der Basis von Oxyden folgendermaßen aufweist:
Cr₂O₃: wenigstens 72,0%
2% < Al₂O₃ ≤ 20%
0,5% < TiO₂≤ 6,0%
ZrO₂ < 4,0%
SiO₂ ≤ 0,9%

2. Produkt nach dem vorhergehenden Anspruch, welches ausgehend von einer Ausgangscharge hergestellt wird, in welcher die Oxyde Cr₂O₃, Al₂O₃, TiO₂, und eventuell ZrO₂ in Form von Teilchen dieser Oxyde vorhanden sind und eventuell von Schamott-Teilchen dieser Oxyde, wobei die Gesamtheit dieser Teilchen eine Pulvermischung bildet, welche eine mittlere Größe von kleiner 50 µm aufweist.

3. Produkt nach dem vorhergehenden Anspruch, welches ausgehend von einer Ausgangscharge hergestellt wird, in welcher die Oxyde Cr₂O₃, Al₂O₃, TiO₂, und eventuell ZrO₂ in Form von Teilchen der Oxyde und eventuell von Schamott-Teilchen der Oxyde vorhanden sind, wobei die Gesamtheit der Teilchen eine Pulvermischung mit einer mittleren Größe kleiner als 10µm bilden.

4. Produkt nach einem der vorhergehenden Ansprüche, welches ausgehend von einer Ausgangscharge hergestellt wird, in welcher die ersten Teilchen- Materialien, die die Oxyde aufweisen, jede eine mittlere Größe kleiner als 150 µm aufweisen.

5. Produkt nach einem der vorhergehenden Ansprüche, welches ausgehend von einer Ausgangscharge hergestellt wird, welche mindestens 10% Schamott in Massenprozenten auf der Basis von Oxyden beinhaltet.

6. Produkt nach einem der vorhergehenden Ansprüche, welches ausgehend von einer Ausgangscharge hergestellt wird, in welcher die Oxydpulver und eventuell Schamottpulver jede eine mittlere Größe kleiner als 150 µm aufweisen.

7. Produkt nach einem der vorhergehenden Ansprüche, welches einen Zirkonoxidgehalt ZrO₂ aufweist, der größer als 0,2% ist.

8. Produkt nach dem vorhergehenden Anspruch, welches einen Zirkonoxidgehalt ZrO₂ aufweist, der größer als 2,0%.

9. Produkt nach einem der vorhergehenden Ansprüche, in welchem der Gehalt an Aluminiumoxyd Al₂O₃ kleiner als 18% ist.

10. Gesintertes Produkt nach den vorhergehenden Anspruch, in welchem der Gehalt an Aluminiumoxyd Al₂O₃ größer als 4% und kleiner als 9% ist.

11. Produkt nach einem der vorhergehenden Ansprüche, in welchem der Gehalt an Titanoxyd TiO₂ kleiner als 5% ist.

12. Produkt nach einem der vorhergehenden Ansprüche, in welchem der Gehalt an Titanoxyd TiO₂ größer als 1,5% und kleiner 4,5% ist.

13. Produkt nach einem der vorhergehenden Ansprüche, in welchem Fe₂O₃ < 0,2% und/oder P₂O₅ < 1% und/oder SiO₂ < 0,5% ist.

14. Produkt nach einem der vorhergehenden Ansprüche, in Form eines Blocks mit einer Masse größer als 5 kg.

15. Vorrichtung, welche ein Produkt nach einem der vorhergehenden Ansprüche aufweist, wobei das Produkt in einem Bereich der Vorrichtung angeordnet ist, wo es in der Lage ist, in Kontakt mit einer oxidierenden Umgebung bei mehr als 1000°C zu gelangen oder mit den emittierten Dämpfen von geschmolzenem Glas.

16. Wanne, welche ein Produkt nach einem der vorhergehenden Ansprüche 1 bis 14 aufweist, wobei das Produkt in einem Bereich der Wanne angeordnet ist, wo es in Kontakt mit einem geschmolzenem Glas gelangen kann.

17. Wanne nach dem vorhergehenden Anspruch, in welcher die Glasschmelze ein Verstärkungsglas des Typs Glas E, Glas R oder Glas S, ein Glas AR oder ein Glas für Isolationsfasern ist.

## Claims

1. A sintered refractory product comprising, in percentages by weight based on the oxides:
Cr₂O₃: at least 72.0%
2% < Al₂O₃ ≤ 20%
0.5%<Ti0₂<6.0%
ZrO₂ < 4.0%
SiO₂ ≤ 0.9%.

2. The product according to the preceding claim, fabricated from a starting charge in which the Cr₂O₃, Al₂O₃, TiO₂ and optionally ZrO₂ oxides are present in a form of particles of said oxides and optionally particles of chamotte of said oxides, said particles together forming a powder mixture presenting a median size of less than 50 µm.

3. The product according to the preceding claim, fabricated from a starting charge in which the Cr₂O₃, Al₂O₃, TiO₂ and optionally ZrO₂ oxides are present in a form of particles of said oxides and optionally particles of chamotte of said oxides, said particles together forming a powder mixture presenting a median size of less than 10 µm.

4. The product according to any one of the preceding claims, fabricated from a starting charge in which each particulate raw material providing the oxides has a median size of less than 150 µm.

5. The product according to any one of the preceding claims, fabricated from a starting charge including at least 10% of chamotte, in percentage by weight based on the oxides.

6. The product according to any one of the preceding claims, fabricated from a starting charge in which each of the oxide powders, and optionally the chamotte powder, presents a median size of less than 150 µm.

7. The product according to any one of the preceding claims, having a zirconia ZrO₂ content greater than 0.2%.

8. The product according to the preceding claim, having a zirconia ZrO₂ content greater than 2.0%.

9. The product according to any one of the preceding claims, wherein the alumina Al₂O₃ content is less than 18%.

10. The sintered product according to the preceding claim, wherein the alumina Al₂O₃ content is greater than 4.0% and less than 9%.

11. The product according to any one of the preceding claims, wherein the titanium oxide TiO₂ content is less than 5%.

12. The product according to any one of the preceding claims, wherein the titanium oxide TiO₂ content is greater than 1.5% and less than 4.5%.

13. The product according to any one of the preceding claims, wherein
Fe₂O₃ < 0.2% and/or
P₂O₅ < 1% and/or
SiO₂ < 0.5%.

14. The product according to any one of the preceding claims, in the form of a block having a weight greater than 5 kg.

15. An installation including the product according to any one of the preceding claims, said product being disposed in a region of said installation where it is likely to come into contact with an oxidizing environment at above 1000°C or with fumes given off by molten glass.

16. A tank including the product according to any one of claims 1 to 14, said product being disposed in a region of said tank where it is likely to come into contact with molten glass.

17. The tank according to the preceding claim, wherein said molten glass is a reinforcing glass of an E-glass, R-glass or S-glass type, an AR-glass, or a glass for insulating fibers.
